# EUROPÄISCHE PATENTSCHRIFT

(11) **EP 2 263 900 B1**
(45) Veröffentlichungstag und Bekanntmachung des Hinweises auf die Patenterteilung: **13.03.2013**
(21) Anmeldenummer: 10183868.8
(22) Anmeldetag: 31.08.2006
(51) Int. Cl.: B60K 6/46, B60K 28/12, B60W 10/06, B60W 30/18, B60W 20/00

(54) **Verfahren zum Betreiben eines Fahrzeuges**
Method for controlling a hybrid vehicle
Procédé de commande d'un véhicule hybride série

(30) Priorität: 24.11.2005 AT 19042005
(43) Veröffentlichungstag der Anmeldung: 22.12.2010
(62) Teilanmeldung aus: 06774757.6
(73) Patentinhaber: AVL List GmbH, 8020 Graz (AT)
(72) Erfinder: Pels, Thomas, 46359, HEIDEN (DE)
(74) Vertreter: Babeluk, Michael

(56) Entgegenhaltungen:
- JP-A- 2005 133 319
- US-A1- 2004 050 598
- US-B1- 6 209 672

## Beschreibung

Die Erfindung betrifft ein Verfahren zum Betreiben eines Fahrzeuges, welches einen seriellen Hybrid-Antriebsstrang mit zumindest einer Brennkraftmaschine und zumindest einer ersten und einer zweiten elektrischen Maschine aufweist, wobei die erste elektrische Maschine durch die Brennkraftmaschine in zumindest einem Betriebsbereich generatorisch betrieben wird und die zweite elektrische Maschine zumindest ein Antriebsrad des Fahrzeuges mittelbar oder unmittelbar antreibt.

Aus der JP 2003-134608 A2 ist eine Steuereinrichtung für den Generator eines elektrischen Fahrzeuges bekannt, wobei der Betriebsbereich des Fahrzeuges in einen bemannten und einen unbemannten Betrieb unterschieden wird. Im bemannten Betrieb wird der Generator gestoppt, sobald ein vordefinierter Ladezustand der Batterie erreicht wird. Im unbemannten Betriebszustand wird der Generator so betrieben, dass er umso mehr Strom der Batterie zuführt, desto geringer deren Ladezustand ist.

Die JP 2003-134607 A2 beschreibt ein ähnliches Verfahren.

Die US 2004/0050598 A1 beschreibt ein Hybridfahrzeug mit einem mit einer Brennkraftmaschine verbundenen ersten Elektromotor und einem zweiten Elektromotor, wobei die Verbrennung in allen Zylindern der Brennkraftmaschine abgeschaltet werden kann. Der erste Elektromotor ist zwischen der Brennkraftmaschine und einem Getriebe angeordnet, wobei zwischen dem ersten Elektromotor und dem Getriebe eine Schaltkupplung vorgesehen ist. Das Getriebe ist mit vorderen Antriebsrädern antriebsverbunden. Der zweite Elektromotor ist mit hinteren Antriebsrädern antriebsverbunden. In Betriebsbereichen, in welchen das Fahrzeug nur vom zweiten Elektromotor angetrieben wird, wird die Brennkraftmaschine ungefeuert betrieben und durch den ersten Elektromotor in Leerlauf angetrieben, um - im Falle eines erhöhten Antriebsleistungsbedarfs - einen raschen und energiesparenden Start der Brennkraftmaschine zu ermöglichen.

Die JP 2005-133 319 A offenbart einen Hybridantriebsstrang mit einer Brennkraftmaschine, wobei bei Abschalten der Brennkraftmaschine durch Öffnen einer Kupplung eine Drehverbindung mit einer elektrischen Maschine unterbrochen wird. US 620 09 672 zeigt die Merkmale des Oberbegriffs des Anspruchs 1.

Bei Fahrzeugen mit seriellem Hybrid-Antriebsstrang wird die Brennkraftmaschine zum Antrieb der ersten elektrischen Maschine mit konstanter Nenndrehzahl betrieben. Dies ermöglicht einen hohen Wirkungsgrad, geringen Verbrauch und niedrige Emissionen. Derartige Fahrzeuge werden beispielsweise für den Linienbusbetrieb eingesetzt. Nachteilig ist, dass insbesondere bei Stillstand des Fahrzeuges, etwa im Haltestellenbereich, eine relativ hohe Geräuschbelastung durch die Brennkraftmaschine auftritt.

Aufgabe der Erfindung ist es, diese Nachteile zu vermeiden und die Geräuschemissionen bei Fahrzeugen mit seriellen Hybrid-Antriebssträngen zu verringern.

Erfindungsgemäß wird dies dadurch erreicht, dass bei niedrigem Batterieladezustand die Brennkraftmaschine bei geöffneter Fahrzeugtüre zum Antrieb der ersten elektrischen Maschine in der Teillast oder im Leerlauf betrieben wird.

Dadurch, dass die Brennkraftmaschine bei benötigter Zuschaltung, also bei niedrigem Batterieladezustand, in der Teillast oder im Leerlauf betrieben wird, kann der Schaltdruckpegel deutlich reduziert werden. Die Brennkraftmaschine läuft dabei zwar nicht im optimalen Betriebsbereich, der Komfort des Fahrzeuges und damit die Akzeptanz des Antriebskonzeptes wird aber dadurch verbessert. Die Betriebsstrategie kann nicht nur bei Bushaltestellen, sondern auch bei verkehrsbedingtem Halten, wie etwa vor Kreuzungen oder dergleichen, angewendet werden.

## Patentansprüche

1. Verfahren zum Betreiben eines Fahrzeuges, welches einen seriellen Hybrid-Antriebsstrang mit zumindest einer Brennkraftmaschine und zumindest einer ersten und einer zweiten elektrischen Maschine aufweist, wobei die erste elektrische Maschine durch die Brennkraftmaschine in zumindest einem Betriebsbereich generatorisch betrieben wird und die zweite elektrische Maschine zumindest ein Antriebsrad des Fahrzeuges mittelbar oder unmittelbar antreibt, **dadurch gekennzeichnet, dass** bei niedrigem Batterieladezustand die Brennkraftmaschine bei geöffneter Fahrzeugtüre in der Teillast oder im Leerlauf zum Antrieb der ersten elektrischen Maschine
betrieben wird.

## Claims

1. A method for operating a vehicle which comprises a serial hybrid drive train with at least one internal combustion engine and at least one first and one second electrical machine, with the first electrical machine being operated by the internal combustion engine in at least one operating range as a generator and the second electrical machine driving at least one drive wheel of the vehicle in an indirect or direct manner, **characterized in that** at low battery charging state the internal combustion engine is operated with partial load or in idle speed for driving the first electrical machine when the vehicle door is opened.

## Revendications

1. Procédé de commande d'un véhicule comportant une ligne d'entrainement hybride en série comportant au moins un moteur à combustion interne et au moins un premier et un second moteur électrique, le premier moteur électrique étant actionné en tant que générateur par le moteur à combustion interne dans au moins une plage de fonctionnement et le second moteur électrique entrainant directement ou indirectement au moins une roue d'entrainement du véhicule, **caractérisé en ce que**
en présence d'un faible état de charge de la batterie le moteur à combustion interne est commandé, en charge partielle ou en marche à vide lorsque les portes du véhicule sont ouvertes, pour entrainer le premier moteur électrique.
